Europäisches Patentamt

European Patent Office

Office européen des brevets

(11) Publication number: **0 268 591 B1**

(12) **EUROPEAN PATENT SPECIFICATION**

(45) Date of publication of patent specification: **26.02.92**   (51) Int. Cl.5: **F16J 15/16,** F16J 15/32

(21) Application number: **86905962.6**

(22) Date of filing: **09.09.86**

(86) International application number:
**PCT/SE86/00399**

(87) International publication number:
**WO 87/01783 (26.03.87 87/07)**

(54) **SEALING DEVICE.**

(30) Priority: **16.09.85 SE 8504286**

(43) Date of publication of application:
**01.06.88 Bulletin 88/22**

(45) Publication of the grant of the patent:
**26.02.92 Bulletin 92/09**

(84) Designated Contracting States:
**AT BE CH DE FR GB IT LI NL**

(56) References cited:
**DE-B- 2 432 181**
**GB-A- 966 561**
**SE-B- 406 499**

**See also references of WO8701783**

(73) Proprietor: **Flutron AB**
**Strömfallsvägen 1 D**
**S-135 49 Tyresö(SE)**

(72) Inventor: **STENLUND, Stig**
**Bataljvägen 22**
**S-133 00 Saltsjöbaden(SE)**

(74) Representative: **Jacobsson, Rune et al**
**Axel Ehrners Patentbyra AB Box 10316**
**S-100 55 Stockholm(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

TECHNICAL FIELD

A sealing device for sealing between two members being relatively movable to each other and having cylindrical separating surfaces with a gap therebetween, comprising a sealing groove formed in one of the members, a sealing ring positioned in said groove, said sealing ring being prestressed and arranged against the cylindrical surface of the other member for dynamic sealing against this surface, said sealing groove being wider than the sealing ring so that there is provided a play between said sealing ring and groove at least on one side of the sealing ring, and at least one sealing element being arranged in the sealing groove so as to seal the sealing ring against the sealing groove, said sealing ring being integrally or split but with the slit being closed when the sealing ring is arranged in the groove.

BACKGROUND OF THE INVENTION

Sealing at high pressures in for instance hydraulic cylinders and similar components is regarding function and reliability critical for most mobile working machines and heavy mechanization and automatization equipments. In spite of intensive development efforts in order to develop more adequate dynamic sealings these wearing details must still be exchanged one or several times during the life of the cylinder. Inadequate sealing function is also one of the most usual and the most serious cause for break-downs in hydraulic systems. The sealing technique of today and the difficulties for the sealing to meet the function desires not only yield poor life but also several other qualities which in varying degrees depending on application type deteriorate the function of the product and furthermore delimit for instance the application range of the hydraulic technique. Besides defective sealing and life it is above all limitations at high and low temperatures as well as limitations in friction and stick-slip which are the serious disadvantages. In consequence of the importance of the sealing function and in consequence of the difficulties to achieve acceptable sealing function it has commonly in both relatively demanding and relatively simple application been tried to reach the best possible results by operating with comparatively close diameter tolerances and very good surface finish on the sealing surfaces, for instance for cylinder pipes and rod pistons. The sealings which usually are built up by polymere materials generally answer for a small part of the cost of the component, while the demands put on cooperating surfaces is a dominating cost compared to the material costs. Thus, the total cost for sealing a component is a dominating cost while the costs for the sealing element itself generally is inconsiderable.

The life time problem can principally arise from three main causes. The sealing body can by the pressure and pressure changes be fatigued, resulting in cracks with leakage and break-down as a consequence. Owing to the pressure the sealing can be forced out into the gap between the two members to be sealed leading to cracks, leakage and break-down as a consequence. In order to reach low dynamic leakage the sealing body is formed with sealing lips or surface projections which pierce the liquid film. If this part of the sealing giving a peak in the contact pressure is worn down, the pressure peak is not forthcoming resulting in increased dynamic leakage and thereby an operation disturbance. The conventional modern sealings of today are accordingly formed considering fatigue, superseding and adequate wear resistance for the wear surfaces of the sealing. Any essentially new sealing types have hardly been developed during the last 20-30 years; however, new detailed configuration of the sealing body as well as new and further developed materials have improved the fatique and superseding qualities as well as the wear qualities. Even if today all types of life problems exist it is, however, mainly the wear of the contact surface of the sealing that is the conclusive problem not yet solved. In spite of the fact that the best known wear resistant materials are used, the wear is nevertheless in most cases unacceptably great. The reason for not reaching further in spite of concentrated efforts over the world during decades is that the principal of function for conventional sealings yields a very high contact pressure in the lip determining the sealing function at the same time as the sealing to a very high degree presupposes that the sealing lip is not worn or owing to setting in the material is deformed. The pressure in the material and in the contact place, i.e. mainly the sealing lip, is the factor that increases the wear as well as the setting of the material. No-one has yet by the aid of sealing configuration and material qualities succeeded in developing a satisfactory conventional sealing, and probably no-one in the future by the aid of now known materials and material qualities could do this completely but only in a varying degree. There is accordingly reasons to believe, that the conventional sealings of today already have been developed relatively far in relation to their potential and cannot be developed further in any decisive way. The high pressures in the sealing lip consist of the sum of the liquid pressure and the pressure that arises in the sealing material when the cross section of the sealing is compressed in its sealing groove. Pre-compression of the sealing is necessary in order to seal dynamically at low pressures and zero-pressures. Since the sealing with time looses its prestressing in the sealing material and thereby in the sealing lip, sealing problems often arise at low pressures after a certain time. These problems usually become acute during winter time when the viscosity is high and the sealing material at low temperature has decreased elasticity. In order to decrease the problems with setting the sealings must accordingly in polymere materials be configured with comparatively large radial height. This results in sealings having unwarranted large dimensions and are difficult and expensive to build into the product. Summing up it can be said, that the sealing function of the conventional polymere sealing already at low pressure must be able to be reached by precompression of a relatively high sealing section. The surface pressure then demanded in the sealing lip is usually of the magnitude of 2-5 MPa. The pressure causing setting and wear in the sealing lip is for a conventional 25 MPa-system between about 10 and 30 MPa, i.e. essentially above the surface pressure required for the sealing function. It is accordingly the fundamental imperfections in the functional principal of the conventional sealings that result in the fact that they are loaded and worn far above what the sealing demand motivates.

A consequence of the high contact pressure between sealing and corresponding surface depending of the liquid pressure is that the starting friction becomes high. Worse is, that this friction is remarkably reduced upon movement and so called stic-slip movement arises easily. When pressure and viscosity and also a number of other factors influence the stick-slip movement, the conventional sealings attribute in a decisive way to the fact that hydraulic solutions at precise positioning have difficulty in vindicating theirselves compared to electromechanical solutions.

A way of decreasing the abrasion on a sealing is to form it such that it already at low speed forms oil film and accordingly functions as a slide bearing. For sealing pistons, where the internal leakage has no detrimental effect, this method can be used and it is used also today to a relatively high degree. At a piston rod, however, outer leakage cannot be accepted and it is in this connection always aimed to prevent film formation. If film formation arises, this takes place at increasing speed and viscosity. By the fact that the velocity in a reciprocating movement in a cylinder must decrease down to zero for turning, film formation only arises during a part of the stroke. At low velocity the wear is great and decisive and therefor sealings having good film formation in practice are not in any decisive way more wear resistant than sealings which cannot form a film.

A sealing device constructed for intentially creating film formation is disclosed in GB-A-966,561. An unsymmetric load on opposite sides of a sealing ring or sleeve is intentionally created. A wedge-shaped section is formed between the sleeve and the opposite surface of a reciprocating rod, thereby exerting a pump action on the fluid in the direction towards the narrower end of the wedge. The prerequisite for this desired transport of the fluid is both the unsymmetric load and an aimed elastic deformation of the sleeve.

Thus, the life for conventional sealings can be essentially increased by choice of wear resistant sealing materials and by having a low profile depth for the cooperating opposite surface and a surface profile form that has a comparatively lower wear than other profile forms. The most usual sealing materials today are polyurethane and nitrile rubber having various wear-decreasing additives. But also PTFE in combination with other materials is a relatively common sealing material. Sealings in polymere materials have since long ago dominated as sealing materials in cylinders and similar components. There is, however, one exception, viz. the piston rings in metal used relatively often particularly in the United States. These piston rings are split with a sealingly overlapping slit. The advantages of this sealing type are good life, high temperature resitance, comparatively low friction, good stick-slip qualities and small dimensions. A very great disadvantage, however, is a comparatively very high leakage, which delimits the piston ring to be used as piston sealing particularly in applications within industrial mechanisation. The piston ring in metal should be an excellent sealing if the leakage was not 100-1000 time higher than soft sealings in polymere materials. The fact that piston rings in metal nevertheless have been used with great success is explained by the fact that the piston leakage is of approximatively the same magnitude of order as the leakage in the valve guiding the cylinder. Important differences between the different materials are their stick-slip qualities and friction qualities and also their tendency to form temporary local molecular bonds to the molecules of the opposite surface. In this respect the usual polyurethane and nitrile materials are the worst, PTFE-combination in different forms better and metal generally the best. With the conventional sealings of today there is no sealing that in all types of applications is the best but both sealing type and material is chosen in order to achieve best possible solution.

## SUMMARY OF THE INVENTION

The present invention eliminates above mentioned and other known disadvantages. It is true that a somewhat increased static initial leakage is accepted, however, in one and the same sealing the following advantages are obtained:

a) Low total cost for sealing and cooperating opposite surface.

b) Long life even if the opposite surface has a relatively high profile depth and a comparatively wearing surface profile.

c) Low friction.

d) Low tendency for stick-slip.

e) Insensitiveness for high and low temperatures.

f) Insensitive material in the sealing not chemically influenced by pressure medium.

g) Low tendency for temporary local molecular bonds between sealing and opposite surface.

h) Storage safe sealing both mounted and unmounted.

i) Small dimensions.

A sealing device according to the invention, which at the same time in one and the same sealing has all the above mentioned qualities, has quality by quality in comparison with the best of the conventional sealing types for respective quality better or at least as good qualities. To make this possible a sealing device according to the invention operates on essential points after new function principals giving favourable function conditions.

To achieve this the invention is characterized as appears from the following claims.

The conventional sealing types have high contact pressure between sealing and cooperating opposite surface directly increasing with the liquid pressure. They have also a certain "sealing lip" or the like decisive for their sealing function, which sealing upon wear and settings in the material is deteriorated resulting in an increasing leakage. The present invention meets as a first essential pre-requisite for good life, the condition that the contact pressure between sealing and cooperating opposite surface is low and in comparatively limited extent influenced by the liquid pressure. As a second essential pre-requisite for good life and good sealing, the sealing device according to the invention meets the condition that its sealing shape important for the sealing is not deteriorated by setting or wear.

The sealing technique of today has, in spite of intensive efforts, not succeeded in solving the problem to provide a pre-stress, which is equal and sufficiently high and which does not change with time, wear and different environmental factors. The most elastic materials as rubber, polyurethane, etc., have been completely decisive for the material choice. As to metal, which generally is considered to have completely insufficient elastic qualities, the only example is piston rings which via bending and bending stresses have obtained a comparatively large ability to change their diameters. The pre-stress of conventional sealings in elastomeres as rubber, polyurethane, etc., is mainly obtained by a compression of the cross section of the sealing and in a slight extent by deformation in circumferencial direction. The soft conventional sealings receive a comparatively even surface pressure around the circumference, which, however, with time owing to settings in the material and wear and also by influence of several environmental factors decreases. In order to decrease settings the radial height of the sealing must be increased and materials or material combinations where at least one of the materials has comparatively good setting qualities must be used. The pre-stress in a conventional piston ring requires in order to be acceptably high, that the radial height of the piston ring is comparatively so high that it is no longer slender. The problem with the piston ring is that it with necessity becomes so high, that it becomes too bending and torsional rigid to be able to follow formed defects, ovality, waveness, etc. of the cooperating opposite surface. Thus, the conventional piston ring in metal has a very uneven circumferencial contact pressure also including portions without surface contact resulting in a comparatively high leakage as a decisive disadvantage. It is extremely surprising that it is possible with a sealing device according to the invention including a sealing ring with a setting-free, elastic and hard material, for instance metal, to obtain above mentioned advantages and achieve desired elasticity and an even, sufficiently high contact pressure sufficiently insensitive by time, wear and different environmental factors. The present invention is built on the observation and the pre-requisite, that the tolerance zone for the diameter of the corresponding opposite surface is lower than the diameter change obtained if the material of the sealing ring in ring direction is subjected to compressive stresses or tensile stresses up to its yield point. It is also surprising that it is with a very little small contact pressure possible to establish a comparatively very high tensile or compressive stress in ring direction. In a sealing device according to the invention both the low contact pressure and the bending and torsional ability in the circumferential direction of the cross section of the sealing ring required for high sealing is obtained by the fact that the ring has a very low radial middle height ($h_m$) and that the cross-section is reduced in its central part. The harmonious combination between the contact pressure (p) of the sealing ring, its diameter (d) (due to a very thin ring the inside, outside or average diameter), its sectional area (A), its middle height ($h_m$), its width (b), its diameter change ($\Delta d$) and its coefficient of elasticity (E) is with satisfactory accuracy evident from the following formula:

$$p = \frac{2 \cdot h_m \cdot \Delta d}{d^2} \cdot E$$

$$h_m = \frac{A}{b}$$

For a certain case the diameter (d) and also the pre-stress, i.e. the diameter change ($\Delta d$), are then definite. The pre-stress ($\Delta d$) must of course be made higher than the tolerance area of the diameter (d). By chosing a material having adequately low coeffecient of elasticity and by making the middle height ($h_m$) sufficiently low, also the contact pressure becomes sufficiently low. As is evident from the formula the middle height ($h_m$) can increase when the diameter (d) increases. At its end surfaces the sealing must have a height exceeding the diametrical height between the details it seals. Between these surfaces the thickness can, however, with advantage be decreased. Bearing in mind commonly existing necessary plays, the sealings can generally be given a middle height of 1 mm and below. The middle height ($h_m$) can increase with the diameter (d) up to comparatively high values at large diameters (d) without the surface pressure (p) becoming too high. For the sealing ring to be able to follow the opposite surface and give complete sealing the middle height ($h_m$) should be limited as well as to a certain degree also its width (b). A sealing device according to the invention creates a contact pressure via elastic setting-free pre-stress in the circumferential direction of the sealing ring, which fundamentally differs from the conventional soft or semi-hard sealings creating their pre-stress substantially by compression of their elastic and setting-inclined cross section. Compared with the conventional piston ring in metal there is also a corresponding fundamental difference in the fact that it only has bending stresses in its cross section which setting-free give the con-' tact pressure. The total contact pressure between the sealing ring and the opposite surface is for a conventional soft sealing approximatively the pre-stressing pressure plus the pressure drop of the medium over the sealing. For the conventional piston ring in metal the contact pressure is approximatively the pre-stressing pressure plus half the pressure drop over the sealing. If no other measures are taken this is also valid for the present invention. As distinguished from the soft conventional sealings and the piston ring in metal split via overlaping slits the sealing device according to the invention can be formed such that the contact pressure to a comparatively high degree is made independant of the pressure in the medium.

A prerequisite for this is the rigid, small, unbroken cross section. Even if the sealing device according to the invention like the conventional piston ring in metal can operate with a contact pressure including half the pressure drop over the sealing, much can be won by decompressing the sealing ring and lowering of the contact pressure. Wear and friction can then be decreased and worse surface on the opposite surface can be accepted. By the fact that the sealing in a preferred embodiment of the invention substantially is made of metal a third essential prerequisite is made possible, i.e. the essential condition for life, sealing and environmental insensitivity that the sealing material and the quality of the sealing shall not negatively be effected at high and low temperatures or chemically by the medium or have tendency to form a temporary molecular bond with opposite surface. Owing to the low and by pressure in the medium comparatively lower affected surface pressure in the contact surface between sealing ring and opposite surface and owing to the preferred stiff sealing material having even and by the environment comparatively weakly affected frictional force the realization of a force essential pre-requisite is made possible giving low friction and low tendency for stick-slip movement. The sealing ring is, when it is mounted, always "unsplit" and lacks slits, either by the fact that upon compressive stresses, as for instance in piston sealing, the split is compressed, or upon tensile stresses, as for instance in a piston rod sealing, there is no split.

When sealings of soft and hard sealing materials, respectively, are pressed against opposite surface there are great differences both in sealing ability and in the wearing. A soft conventional sealing often already during the about 1000 first strokes wears down the opposite surface, measured in the movement direction, to about half the profile depth. The surface wear decreases thereafter strikingly. Measured cross-wise the movement direction the surface unevenness increases then in many cases. The soft sealing has a tendency to wear on the surface both on the tops and in the valleys. This means among other things, that possible soft materials positioned in the valleys can be worn off by the soft sealing. The hard sealing only wears on the tops and it improves all the time the surface measured in all directions. The hard sealing leaves possible material in the valleys completely untouched by the fact that it never reaches down below the tops of opposite surface profile. Comparative life tests between conventional soft and semi-hard sealings and the sealing device according to the invention in a preferred embodiment show that the metal sealing has an almost neglectable wear, while the soft and semi-hard sealings are worn considerably more. More-over, the hard sealing maintains its cylindrical form, while the soft and semi-hard sealings are worn in a considerable way at the "sealing lips" or corresponding, decisive for the sealing, and where the surface pressure is the highest. The wear of metal sealings in tempered steel has after completed long time tests shown to be some part of a micrometer. This can be with safety confirmed, since the wear is limited to partly wearing down of the tops in originally manufactured surface profile of the sealing. The hard metal sealing receives its local highest loads in the points where the sealing surface and the opposite surface accidentally meet each other and then usually top against top. It seems as if a sealing device according to the invention with its extremely low sealing wear is comparatively insensitive to the profile depth and surface characteristic of the opposite surface as distinguished from soft and semi-hard conventional sealings. Conventionally honed, grinded or roll-polished surfaces function well but also comparatively rough drawn surfaces. The manufacturing costs for the cylinder pipe can thereby be lowered. Conventional soft and semi-hard sealing has a safer ability to keep tight by the fact that they can better follow form defects of the opposite surface and thereby prevent the formation of micro-channels between the contact surface of the sealing and the opposite surface. The hard sealing is in this respect limited and both a static initial leakage and in certain cases a dynamic leakage higher than for soft conventional sealings can arise. This is no essential disadvantage for a piston sealing only giving internal leakage, since the sealing leakage is considerably less than the leakage for the cylinder valve and considerably less than the cooling of for instance hydraulic oil in a non-operative hydraulic cylinder corresponds in leakage. Since the micro leakage in channels having a height of the order of magnitude of 1-5 micrometers rapidly ceases after clogging among other things upon hydraulics of the own molecules of the oil, the sealing becomes after a period of non-operation generally statically completely tight. When sealing a piston rod, where the leakage is external and detrimental, the hard sealing can generally not alone give a perfect sealing. The conventional soft sealing is rapidly worn down particularly when the pressure is high and the velocity and the viscosity is low. At low pressures the wear is considerably lower. By combining the present sealing device according to the invention, which is wear resistant and smooth-running even at high pressures, and one for instance conventional soft sealing positioned downwards in the leakage direction, which soft sealing only must keep tight at low pressures, piston rod sealing having low leakage, low friction and long life can be obtained. In order to further increase the sealing of the present sealing device two principally different measures can be taken. Since the main part of the leakage derives from micro-channels in the comparatively rough opposite surface, this surface can be coated with a layer of a softer material than metal, for instance some type of tempered lacquer, etc. This can preferably take place by a surface coating method as described in US-A-4,532,151 and SE-A-8203782-1. According to this method the surface is firstly subjected to vaccuum, whereupon "the lacquer" is directly supplied under high pressure and is spread to an even layer with a thickness of choice. With this method it is then also for instance possible to fill and tighten the porous chromium layer usually existing on piston rod surfaces, but also to coat comparatively rough drawn surfaces and then also eliminate the detrimental effect that possibly existing small draw scratches have. The vacuum gives good adhesion and the possibility for penetration and also good filling of the surface layer, while the pressure is required for giving with safety good penetration and filling of the surface layer. A metallic surface which in this way is completed with a softer material, which substantially is positioned in the valleys of the hard surface, in purities, scratches, etc., is influenced by a sealing device according to the invention and conventional soft sealings in different ways. The leakage of the hard sealing decreases and the film formation is facilitated, since the surface with respect to the flow between sealing and opposite surface has become smoother and tighter. The main contact pressure between sealing and opposite surface is also now taken up by the metal tops of the respective surfaces, but this pressure has now decreased. The soft conventional sealing wears particularly at high liquid pressure on both the tops of the metal surface and the softer material at the longest remains in the valleys of the surface. Depending on the wear qualities of the supplied surface layer, type of soft sealing, etc., the surface is worn more or less so that the underlying surface profile of the surface appears. At low pressures and a good coating material the wear of the conventional soft sealing on the surface coating can become small. This is of value and can be utilized upon sealing of a piston rod with first a sealing device according to the invention, which takes up the high pressure, and thereafter a conventional soft sealing, for instance a U-ring sealing in polyurethane, which maintains high sealing at a low pressure. The other possibility to improve the sealing ability of the present sealing device made in hard material is to coat the contact surface of the sealing against opposite surface with a thin layer of a comparatively soft wear resistant material. It is also possible to build up the sealing by two parts, where the contact surface is positioned in a comparatively seen thicker ring of a semi-hard but comparatively form-stable and wear resistant material, for instance reinforced polymere material, and the pre-stress is substantially obtained by a comparatively seen thinner ring of a more form-stable and setting-free material, for instance metal. The soft or semi-hard material at the contact surface, which is given a thickness of some tenth mm or up to about 1 mm, increases the sealing but becomes more sensitive for poor surfaces and receives higher wear as for instance a tempered steel surface. Upon wear on the contact surface of the sealing ring, however, it substantially maintains its original cylindrical form and wear and setting does not become a sealing problem primarily but first later on when a high wear has decreased the pre-stress and caused a too low contact pressure. As for the other sealing types a coating of opposite surface with a soft wear resistant material is an advantage increasing tightness and life.

PREFERRED EMBODIMENTS

The invention is in the following described more in detail with reference to the accompanying drawings, wherein,

Fig. 1            is a section through a sealing device according to a first embodiment of the invention,

Fig. 1a           is a cross section through a sealing element forming a part of the sealing device according to the invention and shown in unloaded state,

Fig. 2            is a cross section through a sealing ring forming a part of the sealing device according to the invention and illustrates pressures acting on the sealing ring in a loaded condition,

Figs 3 and 4      illustrate exemplified the pressure distribution on the sealing ring,

Fig. 5            is a section corresponding to Fig. 1 and showing another embodiment of a sealing and a further sealing forming a part of the sealing device according to the invention,

Fig. 6            illustrates in a section corresponding to Fig. 5 the first mentioned sealing in another position,

Fig. 7            illustrates a further embodiment of a sealing ring forming a part of the sealing according to the invention,

Fig. 8            is a section through a further embodiment of the invention,

Fig. 9            illustrates a decompressed version of the embodiment according to Fig. 8.

Fig. 10           is a section through a still further embodiment of the invention, and

Fig. 11,          finally, illustrates the pressure distribution on the sealing ring in the embodiment shown in Fig. 10.

A sealing device according to the invention comprises a sealing ring 1 positioned in a sealing groove 2 formed in one of the members 3 and 4, between which sealing shall exist, and dynamically sealing against an opposite surface 5 of the other members. A practical solution pre-requisites. however, that the sealing also seals statically against the member, in which the sealing groove 2 is formed, at the same time as the members 3 and 4 shall be able to move relative each other owing to play, deformations, etc.. Since the sealing ring 1, which is pre-stressedly arranged, is pressed against said opposite surface 5, the sealing follows this surface. The sealing must accordingly with radial movement freedom be sealed against at least that side of the sealing groove 2 where the higher pressure ahead of the sealing drops to the lower pressure after the sealing.

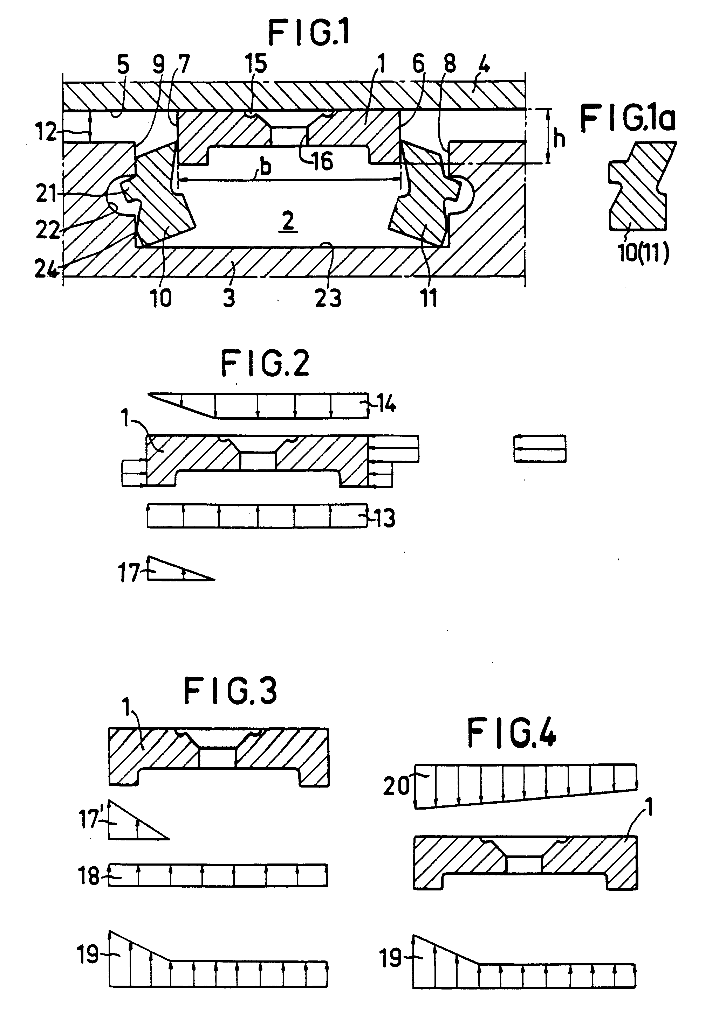

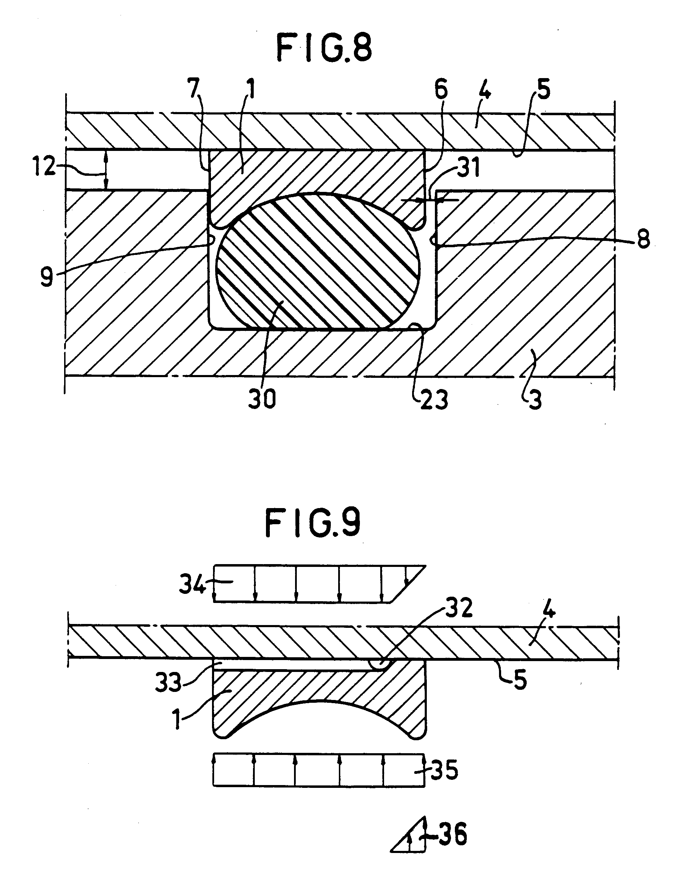

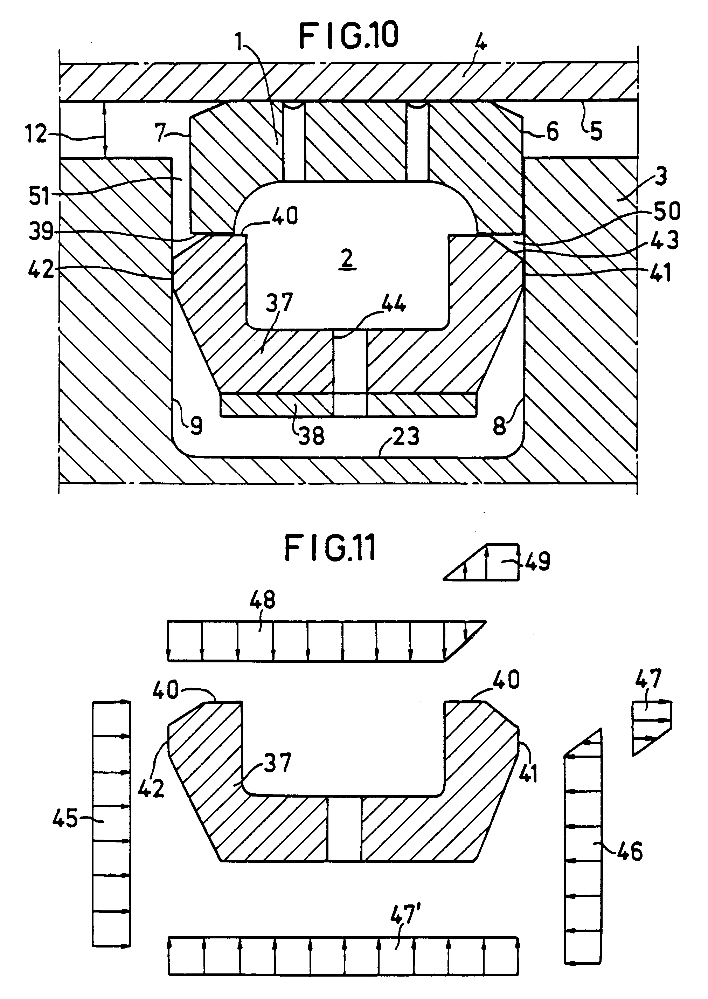

There are according to the invention several possibilities to realize this sealing. Three preferred solutions having suitability in different applications will in the following be described. The first solution is described more completely with the aid of Figs 1-7. This solution involves higher costs for the sealing element but can be pressure-unloaded more unlimitedly and also give a pressure limiting function. The second solution is described more shortly with the aid of Figs 8-9 and substantially with regard to the differences with the first solution. The second solution yields a lower cost for the sealing element but has limitations in its function particularly concerning the possibility of pressure-unload in a double-acting sealing. The third solution is described with reference to Figs 10 and 11 and particularly regarding the differences to the first and second solutions. The third solution yields a lower cost for the sealing element than the first solution (fig. 1-7) and about the same as the second solution (Figs 8-9). It also yields the smallest dimensions and like the first solution it can be pressure-unloaded.

In the embodiment shown in Fig. 1 the sealing is realized by a simultaneous sealing of the space between the side surfaces 6, 7 of the sealing ring 1 and opposite side surfaces 8 and 9, respectively, of the sealing groove 2 by means of resilient washers 10 and 11, respectively. Thus, the washers 10, 11 abut and seal statically against both the sealing ring 1 and against one of the members as shown member 3, while the sealing 1 alone abuts and seals dynamically against the other member 4. A gap 12 between the members 3 and 4 allows these members to move relative each other. The movement between the members 3 and 4 is bridged and sealed at the abutment surfaces between the spring washers 10, 11 and the sealing ring 1, i.e. at the side surfaces 6, 7 of the sealing ring. The sealing must therefore at the contact place have a minimum height larger than the movement area between the members 3 and 4. In order to create lowest possible surface pressure between sealing and opposite surface the sealing ring 1 should be as thin as possible and it is preferably made thinner inside the abutment surfaces 6, 7 against the spring washers 10, 11. In case of no pressure drop over the sealing ring 1, the sealing and the spring washers 10, 11 are in an intermediate position. When a pressure drop arises one of the spring washers, the spring washer 10 as shown in Fig. 1, is at a certain pressure drop pressed against the side surface of the sealing groove 2. There are several function requirements for static sealing between the spring washers 10, 11 and the sealing ring 1. The decisive and or the spring washers 10, 11 dimensioning requirement is that the spring force in the washer 11 at maximum spring-back shall be able to hold the sealing ring 1 against the spring washer 10 when the member 4 moves relative to the member 3 in opposite direction to the pressure drop direction. This is of course valid for both high and low pressures. The spring force in the washer 11 must be so high that it prevents the sealing ring 1 to be drawn from the contact surface and the sealing place between the sealing ring at the washer 10 by the friction force between the sealing ring and the surface of the member 4. The friction force can be kept comparatively low, since the contact surface is small, the friction coefficient is low and the contact pressure is low owing to among other things the pressure balance.

How the pressure balance is obtained appears from Fig. 2. The sealing ring 1 acts in radial direction pressing against the member 4 as appears from the pressure distribution 13 and in the opposite direction away from the member 4 as appears from the pressure distribution 14 obtained by pressure compensation groove 15 and hole 16 formed in the sealing ring 1. Thus, the resulting pressure distribution 17 pressing the sealing against the member 4 acts only on a relatively short part of the sealing surface and then furhtest out where the pressure drops from the higher to the lower pressure. The contact pressure between the surfaces, which shall take up and balance the resulting pressure difference, distributes over the width of the sealing since a section of the sealing is stiff. The distribution is affected by several factors but is always such that the surface pressure at the un-balanced outmost sealing surface is highest. In Fig. 2 also axial stresses are illustrated.

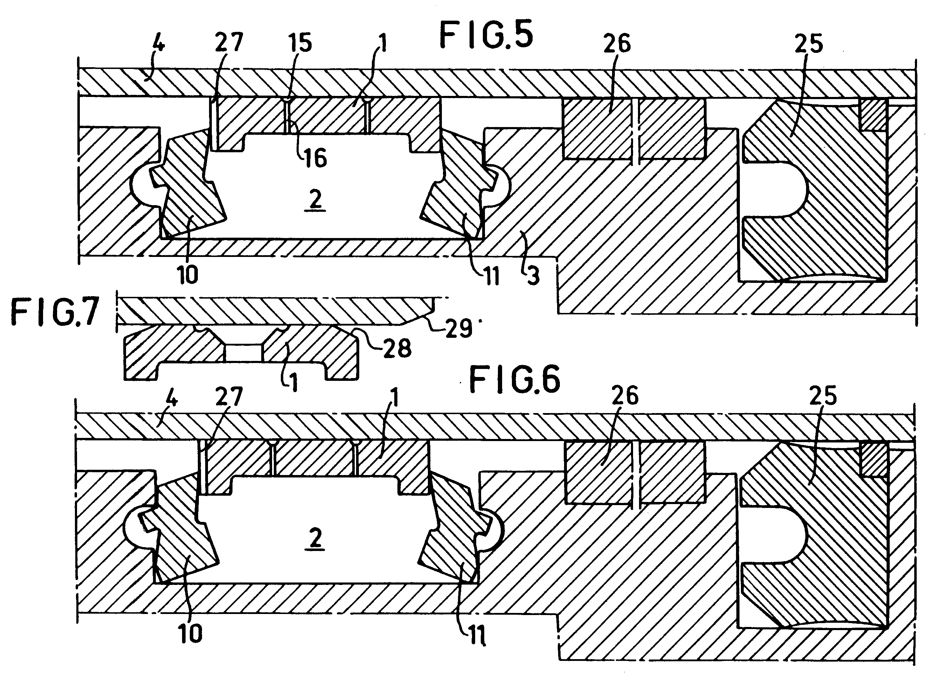

Tests have shown, that when the ring is worn it is worn relatively evenly over its width at the same time as the sealing as a rule increases. A substantial part of the contact force of the sealing ring derives for a pressure-balanced sealing ring from the pre-stress of the sealing ring. In Fig. 3 is shown, how the radially directed resulting pressure distribution 17 in the pressure medium and the likewise radially directed diameter change of the sealing ring as well as "pressure distribution" 18 resulting from the pre-stress are composed to a total resulting pressure distribution 19. Fig. 4 shows, how the resulting pressure distribution 19 is balanced by the contact pressure distribution 20 between the sealing ring 1 and the opposite surface 5 of the member 4. Since the sealing abuts against the opposite surface 5 without any significant torsion, the two pressure distributions 19 and 20 are in balance both regarding force and moment. Since the unbalanced surface part of the total width often is about 20%, the avarage pressure in the contact surface becomes affected by and increased with only about 10% of the pressure in the medium. This is valid as long as the opposite surface 5 does not spring away and decreases or increases the contact pressure due to a decrease or an increase of the pre-stress of the sealing ring 1.

A piston rod sealing, where the piston rod often is massive or coarsely tubular, runs against a surface with a little resilience, while a piston sealing, which runs against a cylinder tube, must follow the diameter of the tube increasing with the pressure. For a piston sealing one therefor chooses for safety reasons preferably to position the pre-stress and unbalanced surface of the sealing ring 1 such that it for a tube with maximum diameter within its tolerance area manage to follow the tube when it is affected by maximum pressure on the high pressure side and for instance about 63% of this pressure on the low pressure side. At the sealing place the tube springs outwardly in proportion to the average value of the pressure ahead and after the sealing. If a long tube at a certain pressure has a resilience of a certain magnitude, the elastic deflexion outwardly becomes at the sealing place normally only half this elastic deflexion since the pressure at the low pressure side of the sealing normally is zero. The increase of the contact pressure that the pressure on the unbalanced surface causes is proportional to the difference between the pressure existing at the high pressure side and the low pressure side of the sealing, respectively.

Since the thickness of the sealing ring can be about 10% of the tube thickness only small unbalanced surfaces and low pressure difference is required for compensating for the decreasing pre-stress in the sealing ring 1 when opposite member 4 owing to the pressure in the medium deflects away. A cylinder tube is generally dimensioned such that, at maximum pressure in the medium, the tensile stress in the tube is about 40-70% of the yield stress value for the tube material. When the average thickness of the sealing is about 10% of the tube thickness, only a surface pressure, contact pressure, of 10% of the maximum pressure of the medium is needed for compressing a sealing ring of the same material a diameter difference corresponding to the maximum diametrical resilience of the tube from zero to maximum pressure. The stress difference arising in the sealing then normally becomes only half the 40-70% of the yield stress value of the tube material obtained as stress in the tube. The stress variation in the piston sealing accordingly becomes only about 20-35% of the yield stress value for the tube material. Since the stress in a piston sealing is compressive stress, which normally never gives fatigue damages, the effect of the pre-stress of the piston sealing is harmless from a fatigue point of view. The piston sealing can also be split having a slit which becomes compressed. For a piston rod sealing is valid, that it is in one piece, unsplit and subjected to tensile stresses which can give fatigue damages. In most cases the piston rod is solid or coarsely tubular and neglectably resilient and therefor the stress changes become neglectably small. In the few cases with a thin-walled piston rod having internal positive pressure, the changes in tensile stress become generally limited to maximum about 20-35% of the yield stress value of the tube material, which can be accepted, since the tube material, which often has poorer fatigue qualities, must handle twice as high stress variations, i.e. if the tube holds the sealing holds. If in order to decrease pre-stress and contact pressure a material with lower coefficient of elasticity than steel, for instance aluminum, is chosen, the fatigue qualities of the material decrease and also its stresses and therefore this does not need to be a problem either. The large part of the maximum deformation of the sealing ring 1 and thereby the large part of the maximum contact pressure deriving from the pre-stress is due to necessary pre-stress for handling sealing both at the smallest and at the largest diameter within the tolerance area. The cylinder tube has normally today the largest tolerance with usually 10th to 11th grade, while the piston rod usually has 8th to 9th grade, i.e. 2 tolerance degrees narrower tolerance area. At the yield stress value for the tube material the cylinder tube has often a maximum resilience which is about twice the tolerance area for 10th ISO-grade. Thus, the maximum pre-stress for a piston sealing gives pressure stresses in the sealing ring which are higher than about half the yield stress value of the tube material. It is therefor appropriate and possible to use about 10th ISO-tolerance grade for the cylinder tube and about 8th to 9th for piston rods.

Thus, proceeding from cylinder tubes and piston rods having today normally existing diameter tolerances a cylinder sealing according to the present invention can be dimensioned which has allowable stresses and which at the same time has comparatively very low values for contact pressure and sealing friction. To this also contributes, that the width of the sealing ring 1 appropriately can be made as narrow as about 3 mm. Since one wishes to delimit the radial height of the sealing, the spring washers 10, 11 should have a low radial height. Practical dimensioning, which is very complicated with several important factors involved, has shown that the depth of the sealing groove 2 with advantage can be delimited to 4-5 mm. Since the spring washers 10, 11 at the contact place against the sealing ring can have a width of only about 1 mm, the width of the sealing groove 2 is only about 5 mm. The combining chain of causes between low sealing height, low sealing width, low contact pressure, low sealing friction and low height and width for the spring washers is an essential pre-requisite for the exceptionally small sealing dimensions of the present invention. The low sensitivity for opposite surface 5 and the low contact pressure in combination with the small sealing dimensions is further an essential pre-requisite making it possible to achieve low total cost for sealing and opposite surface.

The spring washers 10, 11 comparatively small in dimension offer a number of advantages as well as a number of difficulties which in a sealing device according to the invention received a solution which is an important pre-requisite for good and safe operation. Essential is, that the spring washers have a limited radial position from opposite surface 5 and do not diminish the play 12 which must exist between the members 3, 4. Important is also to delimit the position of the spring washers radially inwards in the sealing groove 2, so that the contact surface of the sealing against the spring washers can be as small as possible. This lowers the mean height of the sealing ring 1 and thereby the contact pressure and the sealing friction. Upon pressure drop over the sealing one of the spring washers, 10 as for instance shown in Fig. 1, is pressed very hard against the groove side surface in detail 3. The spring washer then cannot be moved radially without the presence of great forces, for instance if the spring washer should come into contact with the surface 5 on the member 4. Such a contact should probably lead to damages on the member 4 and the spring washer. As exemplified in Fig. 1, the spring washers 10, 11 are via a stop lug 21 formed on each spring washer and via grooves 22 formed in the side walls of the sealing groove 2 prevented to be positioned outside the outer diameter of the member 3. Thus, the gap 12 between the members 3 and 4 can be utilized without the surface on member 4 coming into contact with the spring washers 10, 11. Moreover, the spring washers are prevented to move radially inwardly, as shown in Fig. 1 by the bottom 23 of the sealing groove 2.

Since the spring washers 10, 11 have a low height in radial direction, they have not themselves a possibility to resist the internal positive pressure acting in radial direction between high pressure side and low pressure side. In the exemplified embodiment of the sealing device according to the invention this problem is solved by three simultaneously acting measures. As a first measure the own ability of the spring washers 10, 11 to handle an internal positive pressure is increased by making their mean thickness as large as possible in relation to the thickness at the diameter where the spring washers seal against the sealing ring 1. As a second measure the spring washers 10, 11 have said stop lug 21 in engagement with the groove 22, whereby the diameter change and the radially directed movement of the spring washers are limited. As a third measure the friction force acts, as shown in Fig. 1, between the spring washer 10 and the side surface 9 of the sealing groove 2. By positioning the pivotal point 24 of the spring washers 10, 11 against the side walls 8, 9 of the sealing groove close to the bottom 23 of the sealing groove the spring washers have an essentially larger pressure surface in axial direction than in radial direction. The tendency of the spring washers to change their diameter is then counteracted substantially by friction forces. The three measures mean, that the spring washers 10 and 11, respectively, in spite of its small dimension and its small strength and stiffness with low stresses caused by the pressure are well guided within a narrow position area. Since only one of the spring washers 10, 11 at the same time can be pressed against the side wall 8 and 9, respectively, of the sealing groove, always at least one spring washer is free to act as a pressure limiting valve in both directions. Thus, a dangerous positive pressure between the spring washers cannot arise.

In connection with the sealing of a piston rod, as previously mentioned, a sealing device according to the present invention can be combined with a soft or semi-hard sealing. The low and even pressure pursued for the conventional sealing is controlled in an elegant way by the spring washer 11 facing the soft sealing. Such a sealing device according to the invention including a soft or semi-hard sealing is exemplified shown in Figs 5 and 6. A piston rod sealing is exemplified, in which the piston rod, corresponding to member 4 in Fig. 1, is besides a sealing as shown in Fig. 1 also sealed by a U-sealing 25. Between these sealings as an example of a possible arrangement a piston rod guide 26 has been provided, wherein comparatively large liquid volume is located between the sealings. Via compression of the medium and the soft sealing 25 the space between the sealings can operate as a pressure accumulator. In Fig. 5 is shown how the sealing ring 1 and the spring washers 10, 11 are adjusted when pressure drop is laid over the sealing. The time, during which movement and pressure exist at the same time, then owing to limitation in stroke length and piston rod velocity becomes relatively short. If the leakage over the high pressure sealing is low but higher than for the soft sealing 25, the pressure increases with the stroke and time slowly between the sealings to a relatively low pressure. If thereafter the pressure on the high pressure side as usual is relieved owing to the fact that the pressure alternatively is laid over the two sides of the piston, the sealing on the high pressure side returns resiliently back in a way indicated in Fig. 6. In most cases the sealing ring 1 and the spring washers 10, 11 take an intermediate position. Where within the movement area of the sealing ring 1 the ring stops depends among other things on the magnitude and direction of the sealing friction. Depending on the position the force in the spring washer 11 varies somewhat, but substantially the pressure it delimits between the two sealings is relatively closely controlled. This pressure is then about 2-5 MPa, which is well in harmony with the pressure level where conventional piston rod sealings have the best combination of tightness and life. Also regarding friction and tendency for stick-slip the pressure is here within a comparatively advantageous area. In order to prevent damaging pressures to be built up between the two piston rod sealings 1, 10, 11 and 25, the sealing between the sealing ring 1 and the spring washer 10 (see Figs 5 and 6) should in some way be eliminated. As shown in Figs 5 and 6, this can for instance be realized by a groove 27 in the side surface of the sealing ring 1. Even if most qualities of the conventional piston rod sealings, with the exception of the high tightness, are not as high as those for a sealing device according to the invention, it has, however, with the above described sealing combination, been created possibilities for the conventional sealing to operate within the pressure area where it has its best combination of qualities and its highest resistance to severe operations and environments.

The thin, bendable and via the spring washers 10, 11 relatively easily movable sealing ring 1 can in order to be safe in operation and insensitive for impurities and places of errors on the opposite surface (for instance 5 in Fig. 1) require a further property important for good and safe operation. This property is the ability to avoid cutting between abutting surfaces and rather allow the sealing ring 1 to slide over a hinder or a place of error than try to remove the hinder or level the surface, which probably leads to an accelerated damage. In a sealing device according to the invention this property is achieved by the fact that the sealing is thin and along a short length comparatively bendable and turnable, by the fact that the surface of the sealing ring 1 is hard, preferably very hard and preferably harder than the opposite surface, and by the fact that the sealing ring at its end has, as shown in Fig. 7, a comparatively short chamfer 28 having a small inclination. When desired that the sealing shall be lifted over a place of error or an impurity of some kind having low surface pressure and with forces which as far as possible only are directed radially, partly pressing the sealing ring 1 away from opposite surface 5 and partly the impurity or the damage portion towards the opposite surface, the angle should be lower than the friction angle, preferably about or below 15°.To have a chamfer 28 in the hard sealing can also be necessary in order to be able to pre-stress the sealing upon its mounting in cylinder tubes or on piston rods. The mounting chamfers 29 which can be required on both the cylinder pipe as the piston rod, should have a smaller inclination than the chamfer 28 at the same time as the outer diameter of the chamfer 28 must be such that it can enter into the chamfer 29 before the pre-stress of the sealing ring 1 via the two chamfers 28, 29 is started. The local surface pressures become high at the mounting. They do not cause cutting but often a certain compression of soft surfaces in the chamfer. As for conventional sealings lubrication means is of course with advantage used upon mounting on both sealing and opposite surface. The straight chamfer 28 shown in Fig. 7 can, although not shown, be replaced by a rounded chamfer. Tests have shown, that it can be important that the inclination is close to or below 15°, but it is per se advantageous if the inclination continuously decreases towards the contact surface of the sealing ring. Considering the unbalanced contact pressure of the sealing and its affect on the medium pressure, the chamfer length should be at and be limited to about 10% of the unbalanced width. Without appropriate chamfers on sealing ring 1 and opposite surface 5 it can in many cases be almost impossible to mount the sealing without damages. If the sealing is mountable with a very short chamfer 28, a very chamfer of only a hundredth of mm can give good results. From a safety point of view and bearing in mind the mounting, the chamfer length can with advantage be about 5 hundredth of a mm. It should also be noted, that the sealing ring 1 in a sealing device according to the invention has a certain ability both in operation and upon mounting to pass over holes and grooves having limited diameter and width, respectively. This advantage, which sometimes is of great value, conventional soft and semi-hard sealings do not have.

The above mentioned and on the drawings shown pressure balancing grooves 15, which are formed in the contact surface of the sealing ring 1 and which via one or several holes 16 (Figs 1 and 5, respectively) make the pressure in the grooves coincide with the pressure on the backside of the sealing ring, should also have a small inclination. The pressure balancing grooves 15 are preferably formed circumferentially having large width in relation to depth. This is also of value in view of the bending stresses arising in the sealing ring 1 particularly at high pressures and when the contact place between the sealing ring and the spring washer 10, 11 is positioned at the inner diameter of the sealing ring for a piston sealing and its outer diameter for a piston rod sealing.

The hardness of the sealing ring in a sealing device according to the invention is of importance for life and insensitivity for opposite surface as well as for insensitivity for impurities and damaged parts in opposite surface. Life tests have shown that tempered steel has very good qualities. Other hard surfaces, for instance of titanium nitride, aluminum oxide, hard chrome, etc., can also be used. Surface coatings of type molybdenumdisulphid, teflon, etc., which normally are considered to improve the ability of in-wearing, wear resistance, etc., have not given any provable improvements in wear resistance. Thin and relatively soft coatings having adherence are, however, of a certain value on both sealing ring 1 and spring washers 10, 11 as well as on the side surfaces on the sealing groove 2. This is valid, if such coatings after in-wearing remain in the valleys, scratches, etc., of the surface and thereby tighten these resulting in decreased leakage and faster clogging of the sealing.

In the embodiment of a sealing according to the invention and shown in Figs 8 and 9 the sealing against the groove is provided by an O-ring or similar soft sealing body 30, which primarily tightens between the backside of the sealing ring 1 and the bottom 23 of the groove 2. The sealing ring can in this embodiment for the same direction of the pressure drop and depending of the direction of friction and the relative movement between member 3 and member 4 be set in all positions between those limited by the abutment of the sealing ring 1 and its side surfaces 6 and 7 against one of the groove side surfaces 8 and 9. The difference in width between the groove 2 and the sealing 1 must be so small that the maximum play 31 between them is so small, that the sealing body 30 in spite of maximum pressure drop over the play 31 is not forced out through the play or is damaged so that the function is disturbed or ceases. In practice the play should be about 0,1 mm or less. Conventional so called slide sleeve sealings have a similar sealing configuration. There is, however, an essential and fundamental difference. In the convention slide sleeve sealing the object of the sealing element corresponding to the sealing body 30 is to seal the sealing ring against the groove as well as to be able to bridge the movement between members 3 and 4 but also, as distinguished from this embodiment of the invention, handle the pre-stress of the sealing ring in the sealing ring which usually is made of a comparatively unresilient material inclined for setting. This means, that the sealing body in the conventional sealing must be made high and usually also correspondingly wide, which means larger dimensions than for a sealing according to the present invention, which for normal sealing diameters can be made about 4.5 mm high and 4.5 mm wide. The sealing according to Fig. 8 is double-acting and has a contact pressure affected and increased by about half the pressure drop over the sealing. Fig. 9 shows an embodiment of the sealing ring 1 which is most appropriate for single-acting sealings. The sealing ring 1 is pressure balanced via the pressure balancing groove 32 running around the sealing, which groove via at least one side groove 33 is in communication with the higher pressure. The pressure distribution 34 presses the sealing ring away from the pressure distribution 35 against opposite surface 5. The resulting pressure distribution 36 presses, as described above, the sealing ring aginst the opposite surface 5. The pressure-relieved version of the embodiment can besides single-acting sealing, type piston rod sealing etc., also be used as double-acting sealing in applications which substantially only have one pressure drop direction. Such applications are for instance cranes and other machines usually lifting gravitation loads. Upon a small number of pressure changes in the direction for non-pressure-relief the pressure becomes affected by the total pressure drop over the sealing. This is of course a disadvantage but can usually be accepted in those cases when the sealing operates pressure-relieved under the main part of its operation time. This embodiment is characterized by having exceptionally low costs for the sealing and also small dimensions. A disadvantage compared to the embodiment according to Figs 1-7 is, that it cannot function as pressure limiting valve in double sealings shown in Figs 5 and 6 and that it only can be pressure-unloaded in one pressure drop direction since it acts double-acting. Without pressure-unload and with a width increase to about 4.5 mm, which the O-ring for the most usual diameters at least requires, the friction does not become lower than what is valid for good conventional soft or semi-hard sealings.

In the embodiment of a sealing shown in Figs 10 and 11 the advantages of the embodiments according to Figs 1-7 and Figs 8-9 are united and a pressure-balanced sealing having small groove dimensions is achieved which can be manufactured at a low cost. The sealing against the groove 2 is established by a U-formed ring 37 which can be made of a semi-hard relatively setting-free material, such as nylon, or can be a setting-free material, for instance steel or aluminum, or a combination of these. The sealing takes place between the interior surface 39 of the sealing ring 1 and the outer surface 40 of the U-ring 37 and between the side surface 41 or 42 of the U-ring and the side surface 8 or 9 of the groove 2. The position of the sealing ring 1 is limited by the side surfaces 8 and 9 of the groove 2, and the maximum play 51 can for a certain pressure drop direction be allowed to lay at the groove surface 9, as shown in Fig. 10, but also at the groove surface 8. The sealing ring 1 can also take any position between the outer positions wherein the U-ring 37 independent of the position of the sealing ring 1 seals at the side surface 8 or 9 where the pressure drops. The sealing is obtained by the fact that the side surfaces 41 and 42 of the U-ring always play-free or with a very little play abut the side surfaces 8 and 9 of the groove 2 at the same time as the U-ring 37 by elastic deformation pre-stressed abuts against the interior surface 39 of the sealing ring 1. The U-ring 37 presses by the pressure drop at the sealing place against the side surfaces 8 or 9 of the groove and also against the interior surface 39 of the sealing ring. The U-ring 37 always follows the sealing ring 31 and presses against the sealing ring in pressure-free state by the pre-stress of the U-ring 37 and upon pressure drop over the sealing by the pressure distributions and forces occurring on U-ring 37 depending on the configuration of the U-ring 37 with the chamfer 43 and the side surfaces 41 and 42. The pressure distribution on the U-ring 37 is evident from Fig. 11. As function requirement is valid, that the pressure force pressing U-ring 37 against the sealing ring 1 shall be higher than the friction force existing between U-ring 37 and the side surface 8 or 9 of the groove 2 when the sealing ring 1 and the U-ring 37 move radially relative to the groove 2 in the member 3. The fundamental requirement of this third embodiment is accordingly, that the play and the leakage place which can occur between the sealing ring 1 and the side surfaces 8 or 9 of the groove 2 shall be sealed by one (or several) rings acting on the interior surface 39 of the sealing ring 1 and the side surface 8 or 9 of the groove 2 at pressure-free state via pre-stress in the sealing ring (or rings) and at pressure drop over the sealing, so that the pressure always is able to hold the sealing ring 37 (or rings) against the sealing ring 1 and thereby overcome the friction forces which can arise against the side surfaces 8 and 9 of the groove 2. This can of course be solved in different ways but the configuration according to Figs 10 and 11 shows an advantageous and preferred embodiment. In Fig. 11 is shown how the U-ring 37 via its side surface 41 seals against the side surface 8 of the groove 2. The difference between the axial pressure distribution 45 and the axial pressure distribution 46 gives the axial distribution 47, which via friction between the surfaces 41 and 8 tries to prevent the U-ring 37 to radially follow the sealing ring 1 and also to seal between the surfaces 40 and 39 on the side of the groove 2 where the side surface 8 is positioned. The difference between the radial pressure distributions 47 and 48 presses with the pressure distribution 49 the U-ring 37 radially against the sealing ring 1 so that contact and sealing occurs between the surfaces 40 and 39. Important is that the groove space 2 via for instance one or several holes 44 always has the same pressure on both sides of the U-ring 37. The pressure distribution 49 must for a safe function always give such a high radially directed force that it is greater than the friction force occurring when the sealing ring 1 and the U-ring 37 move radially thereby creating a radially directed friction force at the slide place between the side surface 41 of the U-ring and the side surface 8 of the groove 2. A good and safe solution is obtained if the space 50 formed by the chamfer 43 of the U-ring 37 is preferably formed substantially as long axially as radially and the contact surfaces between the surfaces 40 and 39 are about as long as the contact surface between the surfaces 41 and 8. One then gets a good function up to a friction coefficient of about 1.0. The actual friction coefficiency is dependent on chosen materials lower, why one has the possibility but hardly any good reason to increase the chamfer and contact surface in radial direction along the side surfaces of the groove 2. Important in an embodiment of the type shown in Figs 10 and 11 is, that the U-ring 37 or corresponding sealing element can keep its pre-stress so that it is pressed against the interior surface 39 of the sealing ring 1 during the whole life of the sealing as well as during the whole life the side surfaces 41 and 42 abut against or without large plays are positioned near the side surfaces 8 and 9 of the groove 2. If the U-ring is made of a semi-hard polymere or relatively setting-free material, for instance nylon, the pre-stress in radial direction is maintained. In order to guarantee this it can in certain cases be appropriate to combine the U-ring 37 with a further pre-stress ring 38 in a setting-free material such as steel or aluminum. The cause for the choice of a semi-hard material, for instance nylon, instead of a hard material, for instance aluminum, is that the sealing takes place somewhat better against surfaces having rough or scratched surface structure. The cause for the choice of U-ring or the like in a metallic material is safe pre-stress and a greater insensitivity for temperatures, media etc. A sealing according to Figs 10 and 11 can be built with extremely small widths, for instance 2.5 mm, and extremely low groove depths, for instance 2.5 mm. One has then good possibilities to make a groove without partition and mount the sealing ring 1 and the U-ring 37 or the like by forcing these into the groove in the same manner as for instance a tire is mounted on a rim to a car. Essential is then, that the diameter of the bottom 23 of the groove 2 is adapted for this and not only adapted for the radial movements of the sealing 1 and the U-ring 37.

How high the maximum contact pressure in a sealing device according to the invention can be allowed to be varies with a number of factors, among which particularly can be mentioned the combination of the sealing material and the opposite surface material in the contact surface, their respective surface finishes and surface forms and the lubricating qualitites of the medium. In the conventional soft and semi-hard sealing types the contact pressure becomes about equal to the pre-stress plus the medium pressure. In the present invention the same soft or semi-hard materials in the contact surface can be used but also hard materials withstanding higher contact pressures and poorer opposite surfaces. More decisive is, however, that in a sealing device according to the invention the contact pressure can, as mentioned above, be affected and lowered. The pre-stress is relatively low but can be guided via choice of low values for middle height ($h_m$), diameter change ($\Delta d$) and coefficient of elasticity (E). The medium pressure, which can give high contributions to the contact pressure, can as previously described be limited or eliminated by pressure balancing. Causes for operating with low maximum contact pressure are thereby obtained generally good qualities and also the possibility to accept unfavourable materials and surfaces as well as media having poor lubrication ability. Cause for accepteing a higher contact pressure than what can be obtained arises when the cost of the sealing should be decreased, but the cause does not exist in most cases since the embodiment according to Figs 10 and 11 gives a low cost. Embodiments without pressure-unload can sometimes on favourable sealing conditions give a good total solution in spite of the fact that certain possible improvements are given up. The previously mentioned example with the embodiment according to Fig. 9 in for instance hoisting crane is a typical such application. In the unfavourable applications, where only low contact pressure can be accepted, one operates firstly with a pressure balancing, if the medium pressure is high, and secondly with the pre-stress pressure. Thus, the pre-stress pressure which then sets an upper limit for the middle height ($h_m$) of the sealing ring 1 can answer for the main part of the contact pressure that the material, surfaces and lubrication conditions of the application allow.

In an object to reach low contact pressures a low middle height of the sealing ring is pursued, as previously has been described. The middle height which can be achieved in practice depends firstly on the maximum gap 12 after allowed maximum wear between the members 3 and 4. Secondly the thickness is determined by the tolerances of the opposite details. The maximum gap is also to a high degree dependent of the tolerances of the details, for instance the tube diameter of a cylinder. The calculation of required thickness for the side surfaces of the sealing ring and its central part includes several parameters such as a gap, wear depths, tolerances but also stress calculations regarding the actual stresses on the sealing ring at high pressures. For diameters about 60-80 mm and above, it is with usual normal tolerances for cylinder pipes relatively easy to make favourable constructions having sealing rings in steel. For diameters about 50 mm and below, the result is improved if the sealing ring is made of a material having lower coefficiency of elasticity. Aluminum and its alloys having about 66% lower coefficiency of elasticity are appropriate materials but also certain high-alloy steels and also titanium, chromium, etc., can give good results. Regarding the piston rod sealing the tolerance on the piston rod is normally about 2 tolerance degrees finer than for cylinder pipes but at the same time the piston rod diameter is normally only about 45-63% of the tube diameter for a cylinder. Thus, there are cause to consider also for piston rods about 40 mm and below materials having lower coefficiency of elasticity than steel. Principally, the material choice in sealing rings is not limited to metal but also hard materials can function well, such as glass, ceramic materials and also relatively hard polymere materials, preferably such giving improved form stability and creeping qualities by reinforcement with fibers of different kinds. Tests have shown that the present sealing device operates will even at very low pre-stress. Also materials having certain tendency for setting or creeping can therefore be possible. The difference in temperature expansion must be compensated with pre-stress but is seldom a problem.

A sealing device according to the present invention has primarily been developed in order to seal dynamically in connection with fluid technique. Both linear movements and rotating movements can be sealed. The sealing can of course also be a very appropriate static sealing in many cases where the requirements are high and special. Obvious applications are then cylinder, swivels, pistons in hydraulic pumps and motors, etc. Within the process industry with petroleum, chemicals, foods etc., the invention has an obvious market. The sealing of for instance pistons in internal combustion engines and compressors can also be an appropriate application. In break equipments of different kinds and also in adjacent bearings where temperatures are very high as well as for all other types of sealing places with extremely high or low temperatures and high pressures there is an obvious market, for instance a great number of applications within aerotechnics, military technics and energy technics. The pre-stress and tolerances are of course adapted to the very application.

Several alternative methods can be used for the manufacture of the sealing ring 1 and the spring washers 10, 11. As to the sealing ring in a piston sealing it can be split if it is subjected to compressive stresses which can completely close a split and give complete sealing if the two parting surfaces closely abut each other. Among many possible methods for forming the rings can be mentioned turning, profile rolled wire which is made circular and is welded, plastiv forming, sintering and casting etc. Tempering and grinding follows thereafter for the temperable metals. When the sealings consist of very little material and thereby can give very low material costs, it is of comparatively great importance that material waste is avoided, which for instance at particularly cutting machinery can be unproportionally large. The manufacture with form-rolled wire is from this point of view interesting and then not least for piston sealings which with necessity do not need to be welded. Particularly for larger diameters it is possible to permit several sealing rings, spring washers and U-rings to have the same section, which accordingly can be made from the same form-rolled wire. The sealing rings have a very little section in relation to their diameter. The manufacture becomes special in many regards as to handling, setting, measuring, etc. Since the members at the mounting receive their round plane form relatively large ovalities, skewnesses, etc., can be accepted for loose sealing rings and spring washers. It is then generally not the diameter tolerances of the members per se which are essential, but rather the circumference of the slender members. Since the pre-stress in the sealing ring also is dependent of the circumference of the opposite member, the pre-stress in the sealing ring usually becomes more even than what the diameter tolerance of the opposite member indicates. This is particularly advantageous when using drawn cylinder pipes, the diameter tolerance of which to a great extent is caused by ovality, which means that the circumference of the pipe corresponds to a diameter in the central part of the tolerance area. Round drifts and fixtures must therefor mostly be used when manufacturing sealing rings and spring washers. There are also a number of advantageous possibilities to give the thin rings accurate diameter dimensions by plastic deformation when they are pressed over conical drifts or through conical tube tools.

## Claims

1. A sealing device for sealing between two members (3,4) being relatively movable to each other and having cylindrical separating surfaces with a gap (12) therebetween, comprising a sealing groove (2) formed in one (3) of the members, a sealing ring (1) positioned in said groove, said sealing ring being prestressed and arranged against the cylindrical surface (5) of the other member (4) for dynamic sealing against this surface (5), said sealing groove (2) being wider than the sealing ring (1) so that there is provided a play between said sealing ring (1) and groove (2) at least on one side of the sealing ring (1), and at least one sealing element (10,11,30) being arranged in the sealing groove (2) so as to seal the sealing ring against the sealing groove (2), said sealing ring (1) being integrally or split but with the slit being closed when the sealing ring (1) is arranged in the groove (2), **characterized** in that the sealing ring (1), is formed of a non-elastomeric, resilient and mainly hard material having the characteristic that even after long-time deformation under a strain below its yield point the sealing ring (1) springs back to its original dimensions, one of these dimensions being the radial height (h) along the side surfaces (6,7) of the sealing ring (1) facing the gap (12), this height (h) being less than 3 mm, preferably less than 1 mm and being at least as large as the radial height of the gap (12), the cross-section of the sealing ring (1) being reduced in its central part and the medium height $h_m$ of the total cross-section being according to the formula $h_m = \frac{A}{b}$, where A is the cross-section area of the sealing ring and b its axial width, whereby a form-stiff cross-section for avoiding film formation is obtained, the sealing ring (1) being furthermore characterized in that it has maximum a surface pressure p against said cylindrical surface (5) which considering the material and surface structure of said cylindrical surface (5) and the lubricating qualities of the medium can be described by the formula

$$p = \frac{2 \cdot h_m \cdot \Delta d}{d^2} \cdot E,$$

where E is the coefficient of elasticity of the sealing ring, d its diameter and $\Delta d$ its diametrical elastic deformation, and in that the contact pressure of the sealing ring (1) against said other member (4) is almost exclusively caused by the circumferential stressing of the sealing ring.

2. A sealing device according to claim 1, **characterized** in that the width (b) of the sealing ring (1) is less than 15 mm, preferably less than 5 mm.

3. A sealing device according to claim 1 or 2, **characterized** in that the radial middle height ($h_m$) of the sealing ring (1) is less than its radial height (h) along its side surface (6,7) facing the gap (12).

4. A sealing device according to any of the preceding claims, **characterized** in that said material in the sealing ring (1) is metal.

5. A sealing device according to any of the preceding claims, **characterized** in that the sealing ring (1) is provided with means (15,16,32) for pressure balance over the sealing ring between its contacting surface against said cylindrical surface (5) and opposite surface.

6. A sealing device according to any of claims 1-4, **characterized** in that the sealing ring (1) is provided with means (33) for pressure releave along a part of its contact surface against said cylindrical surface (5).

7. A sealing device according to any of the preceding claims, **characterized** in that the sealing ring (1) is formed with a chamfer (28) at at least one of its edges of the contacting surface against said cylindrical surface (5).

8. A sealing device according to any of the preceding claims, **characterized** in that the sealing ring (1) is arranged in the sealing groove (2) being axially displacable in said groove depending on the pressure difference existing in the gap (12) between both sides of the sealing ring (1) and that at least one sealing element (10,11) is arranged in the sealing groove (2) on one side of the sealing ring (1) between the sealing ring faces (6,7) and the side surfaces (8,9) of said sealing groove (2), said sealing elements also being axially movable depending on said pressure difference.

9. A sealing device according to claim 8, **characterized** in that said sealing elements (10,11) are pivotally arranged in the sealing groove (2).

10. A sealing device according to claim 8 and 9, **characterized** in that said sealing elements (10,11) are provided with means (21) for limiting the movement of the sealing elements radially relative to said cylindrical surface (5).

11. A sealing device according to any of the claims 8 to 10, **characterized** in that the sealing elements consist of spring washers (10,11).

12. A sealing device according to any of the claims 1 to 7, **characterized** in that the sealing element consists of an O-ring (30) or like elastic material positioned between the sealing ring (1) and the bottom (23) of the sealing groove (2).

13. A sealing device according to any of the preceding claims, **characterized** in that a sealing (25) relatively softer than the sealing ring (1) is arranged after the low pressure side of the sealing ring (1).

## Revendications

1. Dispositif d'étanchéité pour réaliser l'étanchéité entre deux organes (3,4) mobiles l'un par rapport à l'autre et présentant des surfaces de séparation cylindriques avec un jeu (12) entre celles-ci, qui comprend une gorge d'étanchéité (2) ménagée dans l'un (3) des organes, un anneau d'étanchéité (1) logé dans ladite gorge, ledit anneau d'étanchéité étant précontraint et appliqué contre la surface cylindrique (5) de l'autre organe (4) pour engendrer une étanchéité dynamique contre cette surface (5), ladite gorge d'étanchéité (2) étant plus large que l'anneau d'étanchéité (1) de sorte qu'il existe un jeu entre ledit anneau d'étanchéité (1) et la gorge (2) au moins d'un côté de l'anneau d'étanchéité (1), et au moins un élément d'étanchéité (10, 11,30) disposé dans la gorge d'étanchéité (2) de façon à assurer l'étanchéité de l'anneau contre la gorge d'étanchéité (2), ledit anneau d'étanchéité (1) étant continu ou fendu mais la fente étant fermée lorsque l'anneau d'étanchéité (1) est logé dans la gorge (2), caractérisé en ce que l'anneau d'étanchéité (1) est fabriqué en une matière non élastomère, résiliente et principalement dure possédant la caractéristique que, même après une déformation de longue durée sous une contrainte inférieure à sa limite élastique, l'anneau d'étanchéité (1) revient élastiquement à ses dimensions initiales, une de ces dimensions étant la hauteur radiale (h) le long des surfaces latérales (6,7) de l'anneau d'étanchéité (1) en regard du jeu (12), cette hauteur (h) étant inférieure à 3 mm et de préférence inférieure à 1 mm et étant au moins aussi grande que la hauteur radiale du jeu (12), la section de l'anneau d'étanchéité (1) étant réduite dans sa partie centrale et la hauteur moyenne ($h_m$) de la section totale étant conforme à la formule $h_m = A/b$ où A est la surface de la section de l'anneau d'étanchéité et b est sa largeur axiale, de sorte qu'on obtient une section de forme rigide pour éviter la formation d'un film, l'anneau d'étanchéité (1) étant en outre caractérisé en ce qu'il a une pression de surface maximale p contre ladite surface cylindrique (5) qui peut être décrite, en fonction de la matière et de la structure de surface de ladite surface cylindrique (5) et des qualités lubrifiantes du milieu, par la formule

$$ p = \frac{2 . h_m . \Delta d}{d^2} . E, $$

où E est le coefficient d'élasticité de l'anneau d'étanchéité, d est son diamètre et $\Delta d$ est sa déformation élastique diamétrale, et en ce que la pression de contact de l'anneau d'étanchéité (1) contre ledit autre organe (4) est presque exclusivement engendrée par la contrainte circonférentielle de l'anneau d'étanchéité.

2. Dispositif d'étanchéité suivant la revendication 1, caractérisé en ce que la largeur (b) de l'anneau d'étanchéité (1) est inférieure à 15 mm et de préférence inférieure à 5 mm.

3. Dispositif d'étanchéité suivant la revendication 1 ou 2, caractérisé en ce que la hauteur

moyenne radiale ($h_m$) de l'anneau d'étanchéité (1) est inférieure à sa hauteur radiale (h) le long de sa surface latérale (6,7) en regard du jeu (12).

4. Dispositif d'étanchéité suivant l'une quelconque des revendications précédentes, caractérisé en ce que ladite matière de l'anneau d'étanchéité (1) est un métal.

5. Dispositif d'étanchéité suivant l'une quelconque dos revendications précédentes, caractérisé en ce que l'anneau d'étanchéité (1) comporte des moyens (15,16,32) pour équilibrer la pression de part et d'autre de l'anneau d'étanchéité, entre sa surface de contact avec ladite surface cylindrique (5) et la surface opposée.

6. Dispositif d'étanchéité suivant l'une quelconque des revendications 1 à 4, caractérisé en ce que l'anneau d'étanchéité (1) comporte des moyens (33) pour la décharge de pression le long d'une partie de sa surface de contact avec ladite surface cylindrique (5).

7. Dispositif d'étanchéité suivant l'une quelconque des revendications précédentes, caractérisé en ce que l'anneau d'étanchéité (1) comporte un chanfrein (28) au moins à un de ses bords de la surface de contact avec ladite surface cylindrique (5).

8. Dispositif d'étanchéité suivant l'une quelconque des revendications précédentes, caractérisé en ce que l'anneau d'étanchéité (1) logé dans la gorge d'étanchéité (2) est axialement déplaçable dans ladite gorge en fonction de la différence de pression qui existe dans le jeu (12) entre les deux côtés de l'anneau d'étanchéité (1) et en ce qu'au moins un élément d'étanchéité (10,11) est prévu dans la gorge d'étanchéité (2) d'un côté de l'anneau d'étanchéité (1), entre les faces (6,7) de l'anneau d'étanchéité et les surfaces latérales (8,9) de ladite gorge d'étanchéité (2), lesdits éléments d'étanchéité étant également axialement mobiles en fonction de ladite différence de pression.

9. Dispositif d'étanchéité suivant la revendication 8, caractérisé en ce que lesdits éléments d'étanchéité (10,11) sont agencés de façon pivotante dans la gorge d'étanchéité (2).

10. Dispositif d'étanchéité suivant la revendication 8 ou 9, caractérisé en ce que lesdits éléments d'étanchéité (10,11) comportent des moyens (21) pour limiter le mouvement des éléments d'étanchéité radialement par rapport à ladite surface cylindrique (5).

11. Dispositif d'étanchéité suivant l'une quelconque des revendications 8 à 10, caractérisé en ce que les éléments d'étanchéité sont des rondelles élastiques (10,11).

12. Dispositif d'étanchéité suivant l'une quelconque des revendications 1 à 7, caractérisé en ce que l'élément d'étanchéité est un joint torique (30) ou un élément en matière élastique analogue placé entre l'anneau d'étanchéité (1) et le fond (23) de la gorge d'étanchéité (2).

13. Dispositif d'étanchéité suivant l'une quelconque des revendications précédentes,caractérisé en ce qu'une garniture d'étanchéité (25) relativement plus souple que l'anneau d'étanchéité (1) est placée après le côté basse pression de l'anneau d'étanchéité (1).

**Patentansprüche**

1. Abdichtvorrichtung zum Abdichten zwischen zwei Elementen (3, 4), welche relativ zueinander beweglich sind und zylindrische trennende Oberflächen haben mit einem Spalt (12) dazwischen, wobei die Abdichtvorrichtung aufweist:

   eine in einem (3) der Elemente ausgebildete Abdichtfuge (2), einen in der Fuge positionierten Abdichtring (1), wobei der Abdichtring vorgespannt ist und gegen die zylindrische Oberfläche (5) des anderen Elementes (4) für ein dynamisches Abdichten gegen diese Oberfläche (5) angeordnet ist, wobei diese Abdichtfuge (2) weiter ist als der Abdichtring (1), so daß für ein Spiel gesorgt ist zwischen dem Dichtring (1) und der Fuge (2) zumindest an einer Seite des Abdichtringes (1), und zumindest ein Abdichtelement (10, 11, 30), welches in der Abdichtfuge (2) angeordnet ist, um den Abdichtring (1) gegen die Abdichtfuge (2) abzudichten, wobei der Abdichtring (1) einstückig oder gespalten ist, aber wobei die Spaltung geschlossen ist, wenn der Abdichtring (1) in der Fuge (2) angeordnet ist,

   **dadurch gekennzeichnet, daß**

   der Abdichtring (1) aus einem nicht-elastomerischen, widerstandsfesten und hauptsächlich harten Material ausgebildet ist, welches die Charakteristik hat, daß selbst nach einer langzeitigen Deformation unter einer Dehnung unterhalb seiner Fließgrenze der Abdichtring (1) zu seinen ursprünglichen Dimensionen zurückspringt, wobei eine dieser Dimensionen die radiale Höhe (h) entlang den Seitenoberflächen (6, 7) des Abdichtringes (1) ist, welcher dem Spalt (12) gegenübersteht, und diese Höhe (h) weniger als 3 mm ist, vorzugsweise weniger als 1 mm, und zumindest so groß ist, wie die radiale Höhe des Spaltes (12), wobei der Querschnitt des Abdichtringes (1) in seinem zentralen Abschnitt verringert ist und die mittlere Höhe $h_m$ des gesamten Querschnittes sich gemäß der Formel $h_m = A/b$ ist, wobei A die Querschnittsfläche des Abdichtringes und b seine axiale Weite ist, wodurch ein formsteifer Querschnitt zur Vermeidung einer Filmbildung erzielt wird, wobei der Abdichtring (1) weiterhin dadurch gekennzeichnet ist, daß er einen maximalen Oberflächendruck p in die zylindrische Oberfläche (5) hat, welche unter Anbetracht der Material- und Oberflächenstruktur der zylindrischen Oberfläche (5) und den Schmiereigenschaften des Mediums beschrieben werden kann durch die Formel $p = 2 E h_m \Delta d/d^2$, wobei E der Elastizitätskoeffizient des Abdichtringes ist, d sein Durchmesser und $\Delta d$ seine diametrale elastische Verformung und dadurch, daß der Kontaktdruck des Abdichtringes (1) gegen das andere Element (4) fast ausschließlich verursacht wird durch das Beaufschlagen des Abdichtringes mit Druck entlang seines Umfanges.

2. Abdichtvorrichtung nach Anspruch 1, dadurch gekennzeichnet, daß die Weite (b) des Abdichtringes (1) weniger ist als 15 mm, vorzugsweise weniger als 5 mm.

3. Abdichtvorrichtung nach Anspruch 1 oder 2, dadurch gekennzeichnet, daß die radiale mittlere Höhe ($h_m$) des Abdichtringes (1) weniger ist als seine radiale Höhe (h) entlang seiner Seitenoberflächen (6, 7), welche dem Spalt (12) gegenüberstehen.

4. Abdichtvorrichtung nach einem der vorhergehenden Ansprüche, dadurch gekennzeichnet, daß das Material in dem Abdichtring (1) Metall ist.

5. Abdichtvorrichtung nach einem der vorhergehenden Ansprüche, dadurch gekennzeichnet, daß der Abdichtring (1) mit einer Einrichtung (15, 16, 32) versehen ist für ein Druckgleichgewicht über den Abdichtring zwischen seiner kontaktierenden Oberfläche gegen die zylindrische Oberfläche (5) und gegenüberliegende Oberfläche.

6. Abdichtvorrichtung nach einem der Ansprüche 1 bis 4, dadurch gekennzeichnet, daß der Abdichtring (1) mit einer Einrichtung (33) versehen ist für eine Druckentlastung entlang eines Abschnittes seiner Kontaktoberfläche gegen die zylindrische Oberfläche (5).

7. Abdichtvorrichtung nach einem der vorhergehenden Ansprüche, dadurch gekennzeichnet, daß der Abdichtring (1) mit einer Abschrägung (28) ausgebildet ist an zumindest einer seiner Kanten der die zylindrische Oberfläche (5) kontaktierenden Oberfläche.

8. Abdichtvorrichtung nach einem der vorhergebenden Ansprüche, dadurch gekennzeichnet, daß der Abdichtring (1) in der Abdichtfuge (2) angeordnet ist, wobei er in der Fuge axial verschiebbar ist, je nach den Druckunterschieden, welche in dem Spalt (12) zwischen beiden Seiten des Abdichtringes (1) vorherrschen, und daß zumindest ein Abdichtelement (10, 11) in der Abdichtfuge (2) an einer Seite des Abdichtringes (1) angeordnet ist zwischen den Abdichtringflächen (6, 7) und den Seitenoberflächen (8, 9) der Abdichtfuge (2), wobei die Abdichtelemente auch axial beweglich sind, je nach dem Druckunterschied.

9. Abdichtvorrichtung nach Anspruch 8, dadurch gekennzeichnet, daß die Abdichtelemente (10, 11) drehbar in der Abdichtfuge (2) angeordnet sind.

10. Abdichtvorrichtung nach Anspruch 8 und 9, dadurch gekennzeichnet, daß die Abdichtelemente (10, 11) mit einer Einrichtung (21) versehen sind zum Begrenzen der Bewegung der Abdichtelemente in radialer Richtung in bezug auf die zylindrische Oberfläche (5).

11. Abdichtvorrichtung nach einem der Ansprüche 8 bis 10, dadurch gekennzeichnet, daß die Abdichtelemente aus federnden Unterlegscheiben (10, 11) bestehen.

12. Abdichtvorrichtung nach einem der Ansprüche 1 bis 7, dadurch gekennzeichnet, daß das Abdichtelement aus einem O-Ring (30) oder ähnlichem elastischen Material besteht, welches zwischen den Abdichtring (1) und dem Boden (23) der Abdichtfuge (2) positioniert ist.

13. Abdichtvorrichtung nach einem der vorhergehenden Ansprüche, dadurch gekennzeichnet, daß eine Dichtung (25), welche verhältnismäßig weicher ist als der Abdichtring (1), angeordnet ist hinter der Niederdruckseite des Abdichtringes (1).

# FIG.1

# FIG.1a

# FIG.2

# FIG.3

# FIG.4

FIG.5

FIG.7

FIG.6

EP 0 268 591 B1

# FIG.8

# FIG.9

# FIG.10

# FIG.11